# FASCICULE DE BREVET EUROPEEN

(11) **EP 2 542 462 B1**
(45) Date de publication et mention de la délivrance du brevet: **07.05.2014**
(21) Numéro de dépôt: 11712962.7
(22) Date de dépôt: 03.03.2011
(51) Int. Cl.: B62D 25/14

(54) **TRAVERSE DE PLANCHE DE BORD DE VÉHICULE AUTOMOBILE**
QUERTRÄGER FÜR DAS ARMATURENBRETT EINES KRAFTFAHRZEUGS
MOTOR VEHICLE DASHBOARD CROSSMEMBER

(30) Priorité: 05.03.2010 FR 1051621
(43) Date de publication de la demande: 09.01.2013
(73) Titulaire: Faurecia Intérieur Industrie, 92000 Nanterre (FR)
(72) Inventeur: BAUDART, Laurent, F-60530 Fresnoy En Thelle (FR); MARTIN, Grégory, F-60000 Beauvais (FR)
(74) Mandataire: Blot, Philippe Robert Emile
(86) Numéro de dépôt international: PCT/FR2011/050448
(87) Numéro de publication internationale: WO 2011/107716

(56) Documents cités:
- FR-A1- 2 881 393
- FR-A1- 2 901 529
- FR-A1- 2 925 009

## Description

La présente invention concerne une traverse de planche de bord de véhicule automobile, du type comprenant une poutre tubulaire réalisée d'un seul tenant prévue pour s'étendre entre les montants A de la structure du véhicule automobile sensiblement suivant une direction transversale du véhicule automobile et des moyens de fixation d'un ou de chaque tronçon d'extrémité de la poutre sur un montant A, les moyens de fixation comprenant un premier orifice et un deuxième orifice de fixation suivant la direction longitudinale, le premier orifice étant ménagé au travers de la poutre.

La traverse de planche de bord est destinée à s'étendre entre les montant latéraux avant ou montant A de la structure du véhicule automobile.

La traverse de planche de bord a notamment pour fonctions de rigidifier la structure du véhicule automobile et de supporter des équipements fonctionnels du véhicule automobile tels qu'une colonne de direction, un système de ventilation de chauffage et de climatisation (système HVAC), un autoradio, un système GPS, un module d'airbag passager, une boîte à gants, etc....

Il est donc souhaitable que la traverse de planche de bord présente une rigidité suffisante et soit fixée de manière rigide aux montants A.

FR 2 925 009 divulgue une traverse de planche de bord de véhicule automobile comprenant une poutre formée d'un seul tenant dont chaque tronçon d'extrémité est partiellement écrasé pour former deux platines de fixation encadrant le tronçon d'extrémité, un orifice de fixation étant ménagé au travers de chaque platine.

Néanmoins, dans certaines situations, une telle poutre ne permet pas d'obtenir un une rigidité suffisante de la poutre en elle-même et de sa fixation aux montants A.

Un but de l'invention est de proposer une traverse de planche de bord pouvant présenter une rigidité suffisante et être fixée de manière suffisamment rigide à la structure du véhicule automobile.

A cet effet, l'invention propose une traverse de planche de bord de véhicule automobile du type précité, caractérisée en ce que les moyens de fixation comprennent en outre un organe de fixation rapporté sur le ou chaque tronçon d'extrémité, le deuxième orifice de fixation étant ménagé au travers de l'organe de fixation.

Selon d'autres modes de réalisation, la traverse de planche de bord comprend une ou plusieurs des caractéristiques suivantes, prise(s) isolément ou selon toutes les combinaisons techniquement possibles :
- la poutre comprend une platine de fixation formée d'un seul tenant avec le ou chaque tronçon d'extrémité et faisant saillie vers l'extérieur à partir du ou de chaque tronçon d'extrémité, le premier orifice étant ménagé au travers de la platine ;
- l'organe de fixation est rapporté sur le ou chaque tronçon d'extrémité de façon que le premier orifice et le deuxième orifice sont disposés de part et d'autre du tronçon d'extrémité ;
- le premier orifice et le deuxième orifice sont disposés symétriquement de part et d'autre du ou de chaque tronçon d'extrémité ;
- la ou chaque platine confère à la poutre une section droite sensiblement en forme de « P » ou de « P » renversé au droit du ou de chaque tronçon d'extrémité ;
- le premier orifice est ménagé au travers de deux faces opposées espacées du tronçon d'extrémité ;
- un organe de renfort est inséré dans le tronçon d'extrémité entre les deux faces opposées pour les maintenir espacées ;
- la poutre comprend un tronçon central, le ou chaque tronçon d'extrémité étant décalé par rapport au tronçon centrale et raccordé à celui-ci par un décrochement ; et
- le tronçon central est rectiligne.

L'invention concerne encore un véhicule automobile comprenant une traverse de planche de bord telle que définie ci-dessus.

L'invention et ses avantages seront mieux compris à la lecture de la description qui va suivre, donnée uniquement à titre d'exemple et fait en référence aux dessins annexés, sur lesquels :
- la figure 1 est une vue en élévation de face d'une traverse de planche de bord selon l'invention ;
- la figure 2 est une vue agrandie d'une région de la traverse de planche de bord de la figure 1 ;
- la figure 3 est une vue section selon III-III sur la figure 2 ;
- la figure 4 est une vue analogue à celle de la figure 2 illustrant une variante du mode de réalisation des figures 1 à 3 ;
- les figures 5 à 7 seront des vues analogues à celles des figures 1 à 3 d'une variante de réalisation.

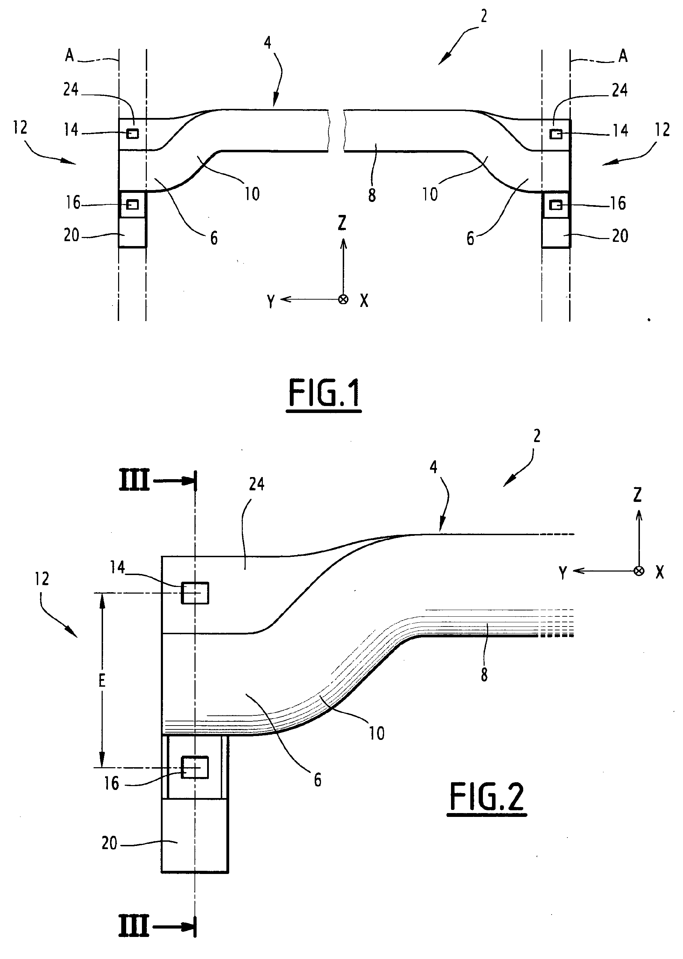

La traverse 2 de planche de bord de véhicule automobile de la figure 1 est destinée à être fixée transversalement entre les montants latéraux avant, ou montants « A », de la structure du véhicule automobile.

Dans la suite de la description, en l'absence de précision, les termes « longitudinal », « transversal », « vertical », « horizontal », « haut » et « bas » s'entendent pas référence au système d'axes orthogonal usuel des véhicules automobiles, illustré sur les figures et comprenant :
- un axe longitudinal X-X, horizontal et orienté de l'arrière vers l'avant ;
- un axe transversal Y-Y, horizontal et orienté de la droite vers la gauche ; et
- un axe vertical Z-Z, orienté du bas vers le haut.

La traverse 2 a notamment pour fonctions de rigidifier la structure du véhicule automobile et de supporter des équipements fonctionnels du véhicule automobile tels qu'une colonne de direction, un système de ventilation de chauffage et de climatisation (système HVAC), un autoradio, un système GPS, un module d'airbag passager, une boîte à gants, etc....

La traverse 2 comprend une poutre 4 tubulaire métallique réalisée d'un seul tenant s'étendant sensiblement suivant l'axe transversal Y-Y. La poutre 4 comprend deux tronçons d'extrémité 6 et un tronçon central 8 s'étendant entre les tronçons d'extrémité 6. Chaque tronçon d'extrémité 6 est prévu pour être relié à un montant A respectif.

Chaque tronçon d'extrémité 6 est relié au tronçon central 8 par un décrochement 10 vers le bas de sorte que chaque tronçon d'extrémité 6 est décalé vers le bas par rapport au tronçon central 8.

Le tronçon central 8 est tubulaire et de section droite constante, par exemple de section circulaire. Il s'étend de manière rectiligne suivant l'axe transversal Y-Y. En variante, le tronçon central 8 peut s'étendre suivant une ligne courbe en présentant par exemple des portions de longueur rectilignes reliées par des décrochements, et/ou une section droite variable.

Les tronçons d'extrémité 6 sont tubulaires de section droite constante et s'étendent de manière rectiligne suivant l'axe transversal Y-Y. Ils sont désaxés suivant l'axe vertical Z-Z vers le bas par rapport au tronçon central 6.

Chaque tronçon d'extrémité 6 est prévu pour être fixé à un montant A respectif au moyen d'éléments de fixation s'étendant sensiblement suivant l'axe longitudinal X-X. A cet effet, la traverse 2 comprend des moyens de fixation 12 pour la fixation de chaque tronçon d'extrémité 6 sur la structure du véhicule.

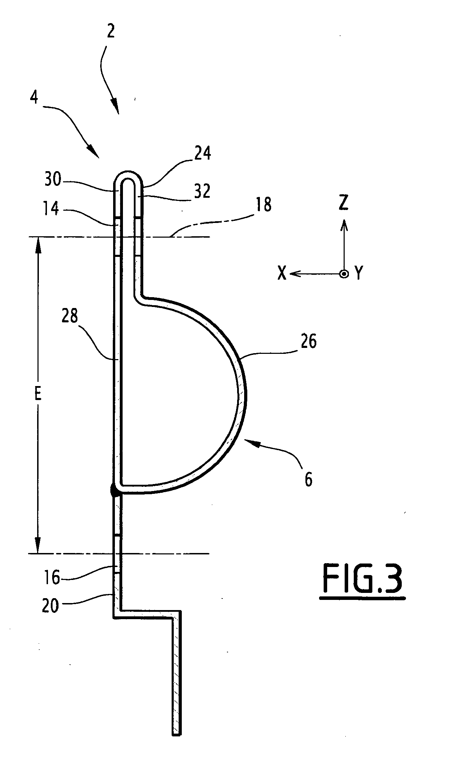

Les moyens de fixation 12 de chaque tronçon d'extrémité 6 comprennent un premier orifice 14 et un deuxième orifice 16 de fixation du tronçon d'extrémité 6 suivant l'axe longitudinal X-X. Le premier orifice 14 et le deuxième orifice 16 sont espacés suivant l'axe vertical Z-Z et sont chacun prévu pour le passage d'un élément de fixation du type vis, boulon ou rivet, sensiblement suivant l'axe longitudinal X-X. Des éléments de fixation sont symbolisés par des traits mixtes référencés 18 sur la figure 3.

Selon l'invention, le premier orifice 14 des moyens de fixation 12 de chaque tronçon d'extrémité 6 est ménagé au travers de la poutre 4 et les moyens de fixation 12 comprennent en outre un organe de fixation 20 rapporté sur le tronçon d'extrémité 6, le deuxième orifice 16 étant ménagé au travers de l'organe de fixation 20.

Dans le mode de réalisation des figures 1 à 3, les moyens de fixation 12 de chaque tronçon d'extrémité 6 comprennent une platine 24 de fixation s'étendant le long du tronçon d'extrémité 6 et venue de matière avec la poutre 4. Chaque platine 24 s'étend en saillie vers l'extérieur à partir du tronçon d'extrémité 6 correspondant, sensiblement dans un plan transversal et vertical. Le premier orifice de fixation 14 est ménagé au travers de la platine 24.

L'organe de fixation 20 est fixé sous le tronçon d'extrémité 6 de façon qu'il fait saillie vers le bas à partir du tronçon d'extrémité 6. L'organe de fixation 20 et la platine 24 encadrent le tronçon d'extrémité 6. Ainsi, le premier orifice 14 et le deuxième orifice 16 encadrent le tronçon d'extrémité 6. De préférence, ils sont disposés symétriquement de part et d'autre du tronçon d'extrémité 6.

Tel que représenté sur la figure 3, la poutre 4 présente au droit de chaque tronçon d'extrémité 6 un section droite en forme de « b » ou de « P » renversé dont le corps est défini par le tronçon d'extrémité et dont le jambage est défini par la platine 24.

Plus spécifiquement, chaque tronçon d'extrémité 6 présente une section droite sensiblement semi-circulaire définie par une première paroi 26 en arc de cercle et une deuxième paroi 28 sensiblement plane s'étendant suivant la corde de l'arc de cercle. La platine 24 est formée par une troisième paroi 30 prolongeant la deuxième paroi 28 vers l'extérieur et une quatrième paroi 32 revenant vers et se raccordant sur la première paroi 26. Ainsi, la platine 24 est formée de deux épaisseurs et le premier orifice 14 est formé au travers des deux épaisseurs.

Tel que représenté sur la figure 2, chaque platine 24 s'étend le long du tronçon d'extrémité 6 correspondant et se prolonge le long du décrochement 10 correspondant jusqu'à la jonction avec le tronçon central 8, ce qui permet d'assurer la rigidité du tronçon d'extrémité 6. La platine 24 présente une hauteur décroissant progressivement depuis l'extrémité libre du tronçon d'extrémité jusqu'au tronçon central 8.

L'entraxe E vertical entre le premier orifice 12 et le deuxième orifice 14 est prévu suffisamment grand pour une fixation rigide du tronçon d'extrémité 6 sur le montant A correspondant.

La poutre 2 monobloc est obtenue par un procédé d'hydroformage connu en soi dans lequel, une ébauche tubulaire est disposée dans une cavité de formage et un fluide sous pression tel que de l'eau ou de l'huile est injecté à l'intérieur de l'ébauche pour la déformer vers l'extérieur jusqu'à venir l'appliquer contre la paroi de la cavité de formage, présentant la forme extérieure souhaitée pour la poutre 2. Le procédé d'hydroformage peut constituer une première étape visant à former des ébauches de platine, qui sont ensuite écrasées pour obtenir la forme illustrée sur la figure 3.

Chaque organe de fixation 20 est fixé sur le tronçon d'extrémité 6 correspondant par tout moyen approprié, et par exemple par soudage.

La combinaison d'une seule platine venue de matière avec la poutre et d'un organe de fixation rapporté sur la poutre pour la fixation d'un ou de chaque tronçon d'extrémité permet d'obtenir une poutre rigide et une fixation rigide de la poutre. Le tronçon d'extrémité peut être prévu avec un décalage vertical important par rapport au tronçon central en conservant une inertie importante et en obtenant un entraxe entre les premier et deuxième orifices de fixation suffisant grâce à l'organe de fixation additionnel rapporté sur le tronçon d'extrémité. La traverse peut en outre être obtenue à faible coût et avec un nombre d'opérations d'assemblage limité sur fait qu'un seul organe de fixation rapporté est nécessaire.

Telle que représenté sur les figure 1 à 3, chaque platine 24 s'étend à partir du tronçon d'extrémité 6 correspondant en sens opposé du décalage entre le tronçon d'extrémité 6 et le tronçon central 8. Plus spécifiquement, chaque tronçon d'extrémité 6 est décalé vers le bas par rapport au tronçon central 8 et la platine 24 associé s'étend vers la haut à partir du tronçon d'extrémité 6. Chaque platine 24 s'étend sensiblement dans le prolongement du tronçon central 8.

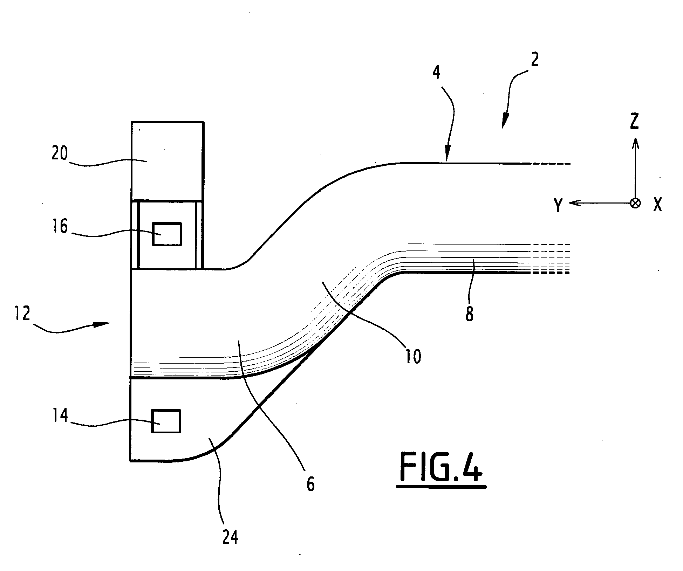

Dans une variante illustrée sur la figure 4, la traverse 2 de planche de bord diffère de celle des figures 1 à 3 en ce que chaque platine 24 s'étend à partir du tronçon d'extrémité 6 correspondant dans la direction du décalage entre le tronçon d'extrémité 6 correspondant et le tronçon central 8. Plus spécifiquement, chaque platine 24 s'étend vers le bas à partir du tronçon d'extrémité 6. Dans ce cas, l'organe de fixation 20 est fixé sur la partie supérieure du tronçon d'extrémité 6, de façon qu'il encadre le tronçon d'extrémité 6 avec la platine 24. Chaque platine 24 confère à la traverse 2 une section droite en « P » au droit du tronçon d'extrémité correspondant.

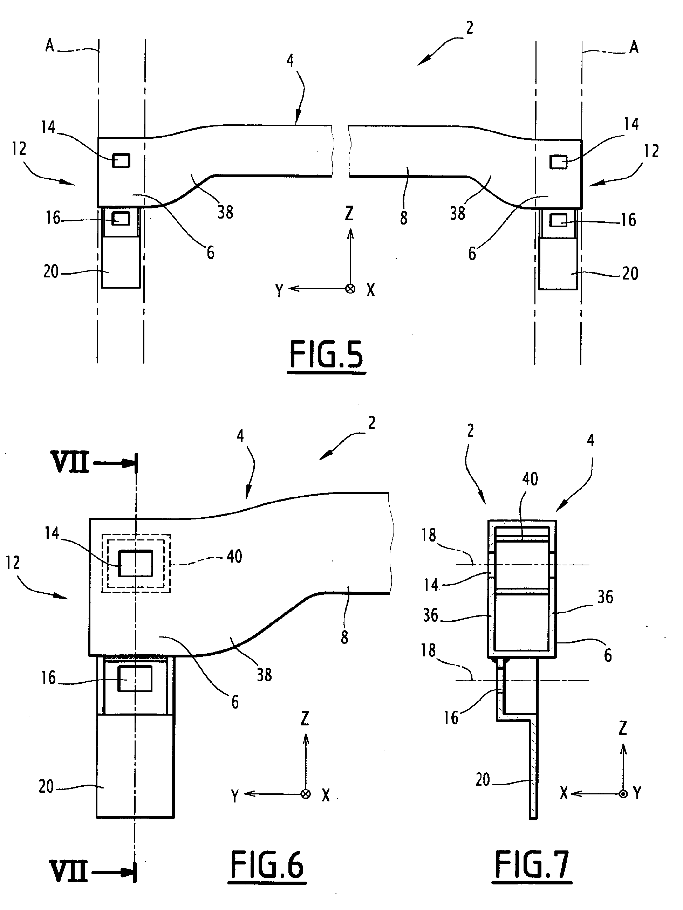

La traverse 2 de planche de bord représentée sur les figures 5 à 7 diffère de celles du mode de réalisation des figures 1 à 3 en ce que les tronçons d'extrémité 6 sont dépourvus de platines et en ce que le premier orifice 14 de fixation de chaque tronçon d'extrémité 6 est ménagé au travers de ce tronçon d'extrémité 6 dans le même sens que le décrochement entre le tronçon centrale 8 et le tronçon d'extrémité 6.

L'organe de fixation 20 est fixé sur le dessus du tronçon d'extrémité 6.

Dans l'exemple illustré, chaque tronçon d'extrémité 6 présente une section droite quadrangulaire (figure 7) et comprend deux faces 36 verticales opposées au travers desquelles est ménagé le premier orifice 14. Le premier orifice 14 est décalé verticalement, ici vers le haut, et l'organe de fixation 20 est fixé sur le tronçon d'extrémité 6 du côté opposé, ici en dessous, de façon à obtenir un entraxe E suffisant entre le premier orifice 14 et le deuxième orifice 16.

Chaque tronçon d'extrémité 6 est relié au tronçon central 8 par un tronçon de transition 38 de section droite variant façon monotone depuis la section droite du tronçon central 8, par exemple circulaire, jusqu'à la section droite du tronçon d'extrémité, par exemple quadrangulaire.

Dans l'exemple illustré, chaque tronçon d'extrémité 6 s'étend transversalement en étant décalé vers le bas par rapport au tronçon central 8. Chaque tronçon de transition 38 s'élargi progressivement vers le bas.

Cette poutre peut être obtenue par hydroformage, ou par emboutissage par étapes successives à partir d'une ébauche tubulaire présentant la section transversale du tronçon central, les tronçons d'extrémité étant déformés par étape successives au cours desquelles on introduit un support interne dans les tronçons d'extrémité et on applique des matrices sur la surface extérieure des tronçons d'extrémités jusqu'à leur conférer la section droite voulue.

Tel que représenté sur la figure 7, la traverse 2 comprend avantageusement un organe de renfort 40 inséré à l'intérieur de chaque tronçon d'extrémité 6 et s'étendant entre les faces verticales 36 pour s'opposer à leur rapprochement.

Dans l'exemple illustré, l'organe de renfort 40 se présente sous la forme d'un élément tubulaire s'étendant transversalement entre les deux faces verticales 36 en regard du premier orifice 14 de sorte que l'axe du premier orifice 14 s'étend au travers de l'organe de renfort 40.

La traverse du mode de réalisation des figures 5 à 7 possède des avantages analogues à ceux du mode de réalisation des figures 1 à 3.

L'invention n'est pas limitée à ces modes de réalisation, d'autres variantes étant envisageables.

Notamment, dans les modes de réalisation illustrés, chaque tronçon d'extrémité chacun est fixé par l'intermédiaire d'un premier orifice prévu au travers de la poutre et d'un deuxième orifice prévu dans un organe de fixation rapporté sur le tronçon d'extrémité. En variante, un seul des deux tronçons d'extrémité est fixé de cette manière.

## Revendications

1. Traverse de planche de bord de véhicule automobile, du type comprenant une poutre (4) tubulaire réalisée d'un seul tenant prévue pour s'étendre entre les montants A de la structure du véhicule automobile sensiblement suivant une direction transversale (Y) du véhicule automobile et des moyens de fixation (12) d'un ou de chaque tronçon d'extrémité (6) de la poutre (4) sur un montant A, les moyens de fixation (12) comprenant un premier orifice (14) et un deuxième orifice (16) de fixation suivant la direction longitudinale (X), le premier orifice (14) étant ménagé au travers de la poutre (4), **caractérisée en ce que** les moyens de fixation comprennent en outre un organe de fixation (20) rapporté sur le ou chaque tronçon d'extrémité (6), le deuxième orifice de fixation (16) étant ménagé au travers de l'organe de fixation (20).

2. Traverse selon la revendication 1, dans laquelle la poutre (4) comprend une platine (24) de fixation formée d'un seul tenant avec le ou chaque tronçon d'extrémité (6) et faisant saillie vers l'extérieur à partir du ou de chaque tronçon d'extrémité (6), le premier orifice (14) étant ménagé au travers de la platine (24).

3. Traverse selon la revendication 2, dans laquelle l'organe de fixation (20) est rapporté sur le ou chaque tronçon d'extrémité de façon que le premier orifice (14) et le deuxième orifice (16) sont disposés de part et d'autre du tronçon d'extrémité (6).

4. Traverse selon la revendication 2 ou 3, dans laquelle le premier orifice (14) et le deuxième orifice (16) sont disposés symétriquement de part et d'autre du ou de chaque tronçon d'extrémité (6).

5. Traverse selon l'une quelconque des revendications 2 à 4, dans laquelle la ou chaque platine (24) confère à la poutre (4) une section droite sensiblement en forme de « P » ou de « P » renversé au droit du ou de chaque tronçon d'extrémité.

6. Traverse selon l'une quelconque des revendications précédentes, dans laquelle le premier orifice (16) est ménagé au travers de deux faces opposées espacées du tronçon d'extrémité (6).

7. Traverse selon la revendication 6, comprenant un organe de renfort inséré dans le tronçon d'extrémité (6) entre les deux faces opposées pour les maintenir espacées.

8. Traverse selon l'une quelconque des revendications précédentes, dans laquelle la poutre (4) comprend un tronçon central, le ou chaque tronçon d'extrémité étant décalé par rapport au tronçon centrale et raccordé à celui-ci par un décrochement (10).

9. Traverse selon la revendication 8, dans lequel le tronçon central est rectiligne.

10. Véhicule automobile comprenant un traverse de planche de bord selon l'une quelconque des revendications précédentes.

## Patentansprüche

1. Querträger für das Armaturenbrett eines Kraftfahrzeugs, der einen in einem Stück hergestellten Rohrträger (4), der vorgesehen ist, um sich zwischen den Stützen A der Struktur des Kraftfahrzeugs im Wesentlichen gemäß einer Querrichtung (Y) des Kraftfahrzeugs zu erstrecken, und Mittel (12) zur Befestigung eines oder jedes Endabschnitts (6) des Trägers (4) an der Stütze A umfasst, wobei die Befestigungsmittel (12) eine erste Öffnung (14) und eine zweite Öffnung (16) zur Befestigung gemäß der Längsrichtung (X) umfassen, wobei die erste Öffnung (14) durch den Träger (4) hindurch ausgebildet ist, **dadurch gekennzeichnet, dass** die Befestigungsmittel außerdem ein Befestigungselement (20) aufweisen, das an dem oder jedem Endabschnitt (6) angesetzt ist, wobei die zweite Befestigungsöffnung (16) durch das Befestigungselement (20) hindurch angeordnet ist.

2. Querträger nach Anspruch 1, bei dem der Träger (4) eine aus einem einzigen Stück mit dem oder jedem Endabschnitt (6) gebildete Befestigungsplatte (24) aufweist, die von dem oder jedem Endabschnitt (6) nach außen vorspringend ausgebildet ist, wobei die erste Öffnung (14) durch die Platte (24) hindurch eingearbeitet ist.

3. Querträger nach Anspruch 2, bei dem das Befestigungselement (20) an dem oder jedem Endabschnitt in der Weise angesetzt ist, dass die erste Öffnung (14) und die zweite Öffnung (16) beidseitig des Endabschnitts (6) angeordnet sind.

4. Querträger nach Anspruch 2 oder 3, bei dem die erste Öffnung (14) und die zweite Öffnung (16) symmetrisch beidseitig des oder jedes Endabschnitts (6) angeordnet sind.

5. Querträger nach einem beliebigen der Ansprüche 2 bis 4, bei dem die oder jede Platte (24) dem Träger (4) einen Querschnitt im Wesentlichen in Form eines "P" oder eines umgekehrten "P" an dem oder jedem Endabschnitt verleiht.

6. Querträger nach einem beliebigen der vorhergehenden Ansprüche, bei dem die erste Öffnung (16) durch zwei beabstandete gegenüberliegende Flächen des Endabschnitts (6) hindurch eingearbeitet ist.

7. Querträger nach Anspruch 6, der ein in den Endabschnitt (6) zwischen die zwei gegenüberliegenden Flächen eingeführtes Verstärkungselement aufweist, um die Flächen beabstandet zu halten.

8. Querträger nach einem beliebigen der vorhergehenden Ansprüche, bei dem der Träger (4) einen Mittelabschnitt umfasst, wobei der oder jeder Endabschnitt in Bezug auf den Mittelabschnitt versetzt ist und mit diesem über einen Absatz (10) verbunden ist.

9. Querträger nach Anspruch 8, **dadurch gekennzeichnet, dass** der Mittelabschnitt geradlinig ist.

10. Kraftfahrzeug, das einen Querträger für ein Armaturenbrett nach einem beliebigen der vorhergehenden Ansprüche umfasst.

## Claims

1. A motor vehicle dashboard crossbeam, of the type comprising a tubular beam (4) made in a single piece provided to extend between the A posts of the structure of the motor vehicle substantially in a transverse direction (Y) of the motor vehicle and means (12) for fastening a or each end section (6) of the beam (4) on an A post, the fastening means (12) comprising a first (14) and second (16) fastening opening in the longitudinal direction (X), the first opening (14) being formed through the beam (4), **characterized in that** the fastening means also comprise a fastening member (20) attached on the or each end section (6), the second fastening opening (16) being formed through the fastening member (20).

2. The crossbeam according to claim 1, wherein the beam (4) comprises a fastening platen (24) formed in a single piece with the or each end section (6) and protruding outward from the or each end section (6), the first opening (14) being formed through the platen (24).

3. The crossbeam according to claim 2, wherein the fastening member (20) is attached on the or each end section such that the first opening (14) and the second opening (16) are positioned on either side of the end section (6).

4. The crossbeam according to claim 2 or 3, wherein the first opening (14) and the second opening (16) are arranged symmetrically on either side of the or each end section (6).

5. The crossbeam according to any one of claims 2 to 4, wherein the or each platen (24) gives the beam (4) a substantially P-shaped or upside down P-shaped cross-section at the or each end section.

6. The crossbeam according to any one of the preceding claims, wherein the first opening (16) is formed through two opposite surfaces spaced apart from the end section (6).

7. The crossbeam according to claim 6, comprising a reinforcing member inserted into the end section (6) between the two opposite surfaces to keep them spaced apart.

8. The crossbeam according to any one of the preceding claims, wherein the beam (4) comprises a central section, the or each end section being offset relative to the central section and connected thereto by a recess (10).

9. The crossbeam according to claim 8, wherein the central section is rectilinear.

10. A motor vehicle comprising a dashboard crossbeam according to any one of the preceding claims.
